# EUROPÄISCHE PATENTANMELDUNG

(11) **EP 0 600 825 A1**
(43) Veröffentlichungstag der Anmeldung: **08.06.1994**
(21) Anmeldenummer: 93810565.7
(22) Anmeldetag: 10.08.1993
(51) Int. Cl.: B01D 61/12, B01D 61/08, B01D 61/22, B01D 61/18

(54) **Membrantrennverfahren, insbesondere Umkehrosmoseverfahren oder Ultrafiltrationsverfahren, und Vorrichtung zur Durchführung desselben**

(30) Priorität: 01.12.1992 CH 3670/92
(71) Anmelder: Christ AG, CH-4147 Aesch (CH)
(72) Erfinder: Meuli, Kurt, CH-4402 Frenkendorf (CH)
(74) Vertreter: Zimmermann, Hans, Dr.

(57) **Zusammenfassung**

Ein unter Druck vorliegender Rohwasserstrom wird mittels eines Membrantrennverfahrens in einen Reinwasserstrom und einen Brauchwasserstrom aufgeteilt. Der Rohwasserstrom unterliegt zeitlichen Durchflussänderungen. Entweder wird das Verhältnis der Durchflussrate des Reinwasserstromes zur Durchflussrate des Rohwasserstromes mindestens annähernd konstant gehalten, oder aus dem Rohwasserstrom wird ein Teilstrom, dessen Durchflussrate konstant ist, entnommen und so aufgeteilt, dass das Verhältnis der Durchflussrate des Reinwasserstromes zur Durchflussrate des Rohwasser-Teilstromes konstant ist.

Die Vorrichtung zur Durchführung der ersten Verfahrensvariante umfasst ein Stellglied zur Steuerung der Durchflussrate des Reinwasserstromes, das seinerseits durch die Durchflussrate des Rohwasserstromes steuerbar ist. Die Vorrichtung zur Durchführung der zweiten Verfahrensvariante umfasst ein Regelventil (3) mit Ueberströmcharakteristik. Dieses ist parallel zur Primärseite des Membranmoduls (4) in die Bypassleitung (2) der Zuleitung (1) für den Rohwasserstrom und der Ableitung (1) für den Brauchwasserstrom eingebaut. Die Vorrichtung zur Durchführung des Verfahrens kann mindestens einen Speicher für das Reinwasser aufweisen.

## Beschreibung

Die vorliegende Erfindung bezieht sich auf ein Membrantrennverfahren, insbesondere ein Umkehrosmoseverfahren oder ein Ultrafiltrationsverfahren, bei dem ein unter Druck vorliegender roher, wässriger Flüssigkeitsstrom, der insbesondere gelöste Verunreinigungen enthält, speziell ein Rohwasserstrom, in einen gereinigten wässrigen Flüssigkeitsstrom, insbesondere einen Reinwasserstrom, der für Zwecke bestimmt ist, die höhere Anforderungen an die Reinheit der Flüssigkeit stellen, und einen weniger reinen wässrigen Flüssigkeitsstrom, der für weniger anspruchsvolle Zwecke bestimmt ist, insbesondere einen Brauchwasserstrom, aufgeteilt wird. Die Erfindung bezieht sich auch auf eine Vorrichtung zur Durchführung dieses Verfahrens.

Aus der am 29. September 1931 veröffentlichten, am 9. Dezember 1926 angemeldeten US-PS Nr. 1 825 631 sind ein Verfahren und eine Vorrichtung zum Enthärten von Wasser durch Umkehrosmose bekannt, wobei man z.B. von hartem Leitungswasser ausgeht. Das Reinwasser kann in einem Speicher gesammelt werden. Wenn dieser gefüllt ist, kann die Umkehrosmose auf verschiedene Weise automatisch vollständig abgedrosselt werden.

Gemäss der am 28. Dezember 1971 veröffentlichten, am 24. Mai 1968 angemeldeten US-PS Nr. 3 630 378 kann ein mittels einer Pumpe zugeführter Rohwasserstrom in einen gereinigten (z.B. enthärteten oder entsalzten) Strom und einen Brauchwasserstrom aufgeteilt werden, vorteilhafterweise durch Umkehrosmose oder Elektrodialyse. Die beiden Ströme können z.B. jeweils in einem Speicher aufbewahrt und bei Bedarf dem jeweiligen Verbraucher zugeführt werden. Die beiden Speicher stehen auch mit der Rohwasserleitung in Verbindung; über diese Leitung entnimmt die Pumpe Wasser aus den von der Reinwasser- bzw. Brauchwasserentnahme abgewandten Seiten der Speicher und führt es der Wasserbehandlung zu, wenn aus den Speichern nicht die produzierten Rein- bzw. Brauchwassermengen entnommen werden.

Um den Anschluss an eine Ablaufleitung bei Umkehrosmosegeräten, der nicht immer leicht installierbar ist, zu vermeiden, schlägt die am 17. Juli 1973 veröffentlichte, am 17. Februar 1971 angemeldete US-PS Nr. 3 746 640 vor, die beiden Hochdruck-Anschlüsse des Membranmoduls mit unterschiedlichen Stellen desselben Wasserversorgungssystems zu verbinden, z.B. den einen Anschluss mit einem Kaltwasserstrang und den anderen Anschluss mit der Kaltwasserleitung, die die Warmwasserversorgung speist. Bei der Wasserentnahme in einem Strang fällt der Druck gegenüber dem anderen Strang ab, und Wasser fliesst durch das Membranmodul über die Membran zum Strang, der unter geringerem Druck steht. Im günstigsten Fall entsteht bei dieser Fahrweise kein Abwasser.

In einer zweiten Variante ist der zweite Anschluss an der Hochdruckseite des Membranmoduls mit einem Speicher mit Luftpolster (Windkessel) verbunden, in den zunächst Rohwasser fliesst, bis der Druck in dem Windkessel gleich dem Druck in der Rohwasserleitung ist. Dann presst der Druck in der Rohwasserleitung Wasser durch die semipermeable Membran in den Reinwasserspeicher, bis der Druck im Reinwasserspeicher gleich dem Druck in der Rohwasserleitung ist. Wenn aus der Rohwasserleitung Wasser entnommen wird, sinkt der Druck in der Rohwasserleitung, und infolge des nun höheren Drucks in dem Windkessel fliesst Wasser aus dem Windkessel zurück entlang der Hochdruckseite der Membran. Wird kein Wasser mehr aus der Rohwasserleitung entnommen, so fliesst wegen des nun wieder niedrigeren Drucks in dem Windkessel ein Wasserstrom in der entgegengesetzten Richtung.

Um die Verunreinigung einer Membran in einem Umkehrosmose-Wasserreinigungsgerät im Haushalt an der Rohwasserzufuhrseite zu vermeiden, wird gemäss der am 18. März 1980 veröffentlichten und am 9. August 1978 angemeldeten US-PS Nr. 4 193 872 die semipermeable Membran automatisch jedesmal gereinigt, wenn kaltes Wasser aus dem Hahn der Spüle entnommen wird, da die Rohwasserzufuhr mit dem Rohwassereinlass und dem Konzentratauslass des Membranmoduls verbunden ist.

Man kann die semipermeable Membran aber auch reinigen, indem man in das Brauchwassersystem ein Ventil einbaut, das bei jeder Betätigung eines Handschalters geöffnet wird, der sowieso öfters betätigt wird, z.B. um einen Müllschlucker (Müllvernichter) ein- und abzuschalten.

Aufgabe der am 9. April 1991 veröffentlichten, am 20. März 1990 angemeldeten US-PS Nr. 5 006 234 ist es, Abwasser zu vermeiden, indem durch das Membranmodul ein Teilstrom des Rohwassers geleitet wird, der durch Parallelschaltung einer in die Rohwasser- bzw. Brauchwasserleitung eingebauten Verengung mit der Hochdruckseite des Membranmoduls entsteht. Weil die Grösse dieses Teilstromes praktisch proportional dem durch die Verengung fliessenden Wasserstrom ist und damit wie dieser veränderlich ist, der durch die Membran abfliessende Reinwasserstrom aber praktisch konstant ist, sind die beiden Flüssigkeitsströme einander nicht proportional.

Grössere Wasserreinigungsanlagen, die nach einem Membranverfahren arbeiten, das heisst, Anlagen mit stündlichen Leistungen von mehr als 100 l und meist mehr als einigen Hundert Litern, werden in Industrie und Gewerbe, aber auch in Spitälern und Gemeinschaftsverpflegungsbetrieben eingesetzt. Sie werden gewöhnlich mit konstantem Durchsatz betrieben. In diesem Falle ist es leicht, ein konstantes Verhältnis von Durchflussrate des Reinwasserstroms zu Durchflussrate des Rohwasserstroms, das auch als "Water Conversion Factor" (WCF) bezeichnet wird, einzuhalten.

Derartige Wasserreinigungsanlagen mit mittlerer Leistung, die ca. 10 bis 100 l/h Reinwasser produzieren, und insbesondere Kleinanlagen, die bis zu rund 10 l/h produzieren, werden hingegen meist (wie z.B. auch nach den angeführten US-PS 1 825 631; 3 746 640; 4 193 872 und 5 006 234) mit variablem Durchsatz, aber auch mit variablem WCF betrieben.

Bei der Wasserreinigung soll der WCF möglichst hoch sein, damit das Rohwasser gut ausgenutzt wird, aber er darf nur so hoch sein, dass die Eindickung des Rohwassers nicht zu Störungen infolge der Belegung der Membran mit unlöslich gewordenen Inhaltsstoffen des Rohwassers führt. Durch eine geeignete Vorbehandlung des Rohwassers kann seine Zusammensetzung derart verändert werden, dass ein höherer WCF erzielt werden kann, ohne dass die Membran verunreinigt wird.

Je grösser die in einer Anlage pro Zeiteinheit produzierte Reinwassermenge ist, desto stärker fallen die Rohwasser- und Abwasserkosten ins Gewicht. Wenn täglich mehrere Kubikmeter Reinwasser benötigt werden, kann es ausschlaggebend sein, ob zur Produktion von 1000 l Reinwasser ein sogenannter Eigenwasserverbrauch von 500 l oder von nur 100 l als Abwasser abgeführt werden muss. In Grossanlagen wird der Eigenwasserverbrauch zum grössten Einzelkostenfaktor. Angesichts der steigenden Wasser- und Abwasserkosten wird es daher erstrebenswert, einen Rohwasserstrom in zwei brauchbare Ströme, das heisst, in zwei Wasserströme mit verschieden anspruchsvollen Verwendungszwecken angepassten Eigenschaften, aufzuteilen statt in nur einen brauchbaren Strom sowie einen Abwasserstrom.

Die Aufteilung eines Rohwasserstroms in zwei verschiedene brauchbare Wasserströme wird auch bei grösserem Wasserbedarf zuweilen insofern schon angewandt, als das in der Regel drucklos anfallende Abwasser der Membrantrennanlage, die eine zeitlich gleichbleibende Reinwassermenge produziert, mittels Pumpen wieder auf den Rohwasserdruck gehoben und dem Rohwasserstrom beigemischt wird. Aus der grossen Wassermenge, die z.B. in einem Industriekomplex verbraucht wird, kann so die viel kleinere gereinigte Wassermenge gewonnen werden, die als solche oder nach weiterer Reinigung für die Kesselspeisung und andere anspruchsvolle Verwendungszwecke benötigt wird. Gewerbebetriebe können statt konventionell enthärtetem Wasser gereinigtes Wasser verwenden, das in einer Membrantrennanlage bei der beschriebenen Aufteilung in zwei brauchbare Ströme gewonnen wird.

Während bei Kleinanlagen in erster Linie angestrebt wird, einen grösseren Rohwasserstrom in einen kleineren Wasserstrom von besserer Qualität und einen grösseren Brauchwasserstrom von kaum verschlechterter Qualität aufzuteilen, wobei die Wasserkosten und sogar die Membranerneuerungskosten keine entscheidende Rolle spielen, so dass die Anlage auch mit einem innerhalb gewisser Grenzen veränderlichen WCF oft noch wirtschaftlich betrieben werden kann, lassen sich die Betriebskosten bei grösseren Anlagen nur durch die grösstmögliche Einsparung von Wasser und die Aufrechterhaltung der Membranwirksamkeit minimieren, und dazu muss der günstigste WCF genauer eingehalten werden. Nur mit dem optimalen WCF kann man einen gegebenen Rohwasserstrom am wirtschaftlichsten in zwei Wasserströme aufspalten, von denen der reinere für eine anspruchsvolle Verbrauchergruppe und der weniger reine für eine weniger anspruchsvolle Verbrauchergruppe gut geeignet ist. Dabei kann eine gewisse, wenn auch vergleichsweise viel geringere Abwassermenge anfallen, wenn die beiden Wasserströme nicht dauernd dem jeweiligen Bedarf entsprechen und der weniger reine Strom im Ueberschuss über die benötigte Menge produziert wird.

Die Aufgabe, einen bestimmten WCF einzuhalten, wird nach dem Stand der Technik nur in Anlagen gelöst, die mit gleichbleibender Leistung betrieben werden. Bei diesen Anlagen fallen sowohl das Abwasser als auch das Reinwasser in der Regel drucklos an. Das Abwasser wird der Trennanlage zunächst unter Druck entnommen, aber dann zur Regulierung seines Stromes bis auf den Atmosphärendruck abgedrosselt. Das Reinwasser wird gemäss dem Bedarf seiner Verbraucher gespeichert und gepumpt, und auch das Abwasser muss, sofern es wieder dem Rohwasser als Brauchwasser beigemischt wird, gepumpt werden.

Bei dem Verfahren gemäss der US-PS 5 006 234 wird wohl ein gleichbleibender WCF eingehalten, aber der optimale WCF ist bei dieser Betriebsweise zeitlich veränderlich, da das auf die Trennanlage gelangende Wasser infolge veränderlicher Rückführung der beiden Wasserströme nicht mehr eine gleichbleibende Zusammensetzung aufweist.

Das erfindungsgemässe Verfahren ist nun dadurch gekennzeichnet, dass
a) der rohe Flüssigkeitsstrom zeitlichen Durchflussänderungen unterliegt und dass das Verhältnis der Durchflussrate des gereinigten Flüssigkeitsstromes zur Durchflussrate des rohen Flüssigkeitsstromes mindestens annähernd konstant gehalten wird oder
b) dem zeitlichen Durchflussänderungen unterliegenden rohen Flüssigkeitsstrom ein Teilstrom, dessen Durchflussrate konstant ist, entnommen und aufgeteilt wird, wobei das Verhältnis der Durchflussrate des gereinigten Flüssigkeitsstromes zur Durchflussrate des rohen Teilstromes konstant gehalten wird,

wobei der weniger reine Flüssigkeitsstrom unter einem nur geringfügig niedrigeren Druck als der rohe Flüssigkeitsstrom zur Verfügung steht.

Das Verfahren gemäss der Erfindung ist vorteilhaft nicht nur für Membrantrennanlagen mit kleiner oder mittlerer Produktionsleistung, sondern auch für solche mit grosser Produktionsleistung, wo nicht nur die Rohwassereinsparung und die Verminderung der Abwassermenge, sondern auch die Lebensdauer der Membran und der Wegfall der Pumpen, um das Abwasser als Brauchwasser zu seinen Verbrauchsstellen zu führen, von entscheidender Bedeutung für die Wirtschaftlichkeit sind.

Das erfindungsgemässe Verfahren kann zur Gewinnung von gereinigtem Trinkwasser aus dem Leitungswasserstrom, der alle Verbrauchsstellen eines Verbrauchsbereichs, z.B. einer oder mehrerer Wohneinheiten, versorgt, bei denen das Wasser nicht mit Lebensmitteln in Kontakt kommt, angewandt werden. Dabei wird aus dem angelieferten Leitungswasser mit Hilfe einer Umkehrosmose- oder Ultrafiltrationsmembran ein geringer Anteil von gereinigtem Trinkwasser extrahiert, der zur Zubereitung von Lebensmitteln und für andere Zwecke, die an die Wasserqualität höhere Anforderungen stellen, verwendet werden kann.

Erfindungsgemäss wird nicht primär ein bestimmter konstanter Mengenstrom gereinigtes Wasser aus dem zur Verfügung stehenden Wasser extrahiert und das dabei drucklos anfallende Abwasser wieder dem Rohwasser beigemischt, sondern entweder wird dem Rohwasserstrom, dessen Durchflussrate zeitlich veränderlich sein kann, ein dem Rohwasserstrom mindestens annähernd proportionaler Reinwasserstrom entnommen und das gleichzeitig entstehende Brauchwasser unter einem gegenüber dem Rohwasserdruck nur geringfügig verminderten Druck weniger anspruchsvollen Verwendungszwecken zugeführt, oder es wird aus dem unter einem praktisch konstanten Druck, aber mit variabler Durchflussrate zur Verfügung stehenden Rohwasser ein Teilstrom mit konstanter Durchflussrate entnommen, dieser über eine Membrantrennanlage geleitet, in der ein konstanter Reinwasserstrom abgeführt wird, und das Rohwasser, aus welchem das Reinwasser extrahiert wurde, wieder mit dem Hauptstrom des Rohwassers vereinigt.

Bei beiden Varianten des erfindungsgemässen Verfahrens bleibt der WCF, das Verhältnis der Durchflussrate des gereinigten Wassers zur Durchflussrate des auf der Hochdruckseite des Membranmoduls an der Membran vorbeiströmenden Wassers, annähernd konstant.

Man kann das Rohwasser gewünschtenfalls vor der Membrantrennung partiell oder vollständig enthärten oder es zur Verhinderung der Ausscheidung von darin gelösten schwerlöslichen Stoffen mit geeigneten Substanzen, beispielsweise Polyphosphat, versetzen.

Das Wasser wird durch den Unterschied zwischen dem Druck des Rohwassers und dem Druck des Brauchwassers durch die Hochdruckseite des Membranmoduls an der Membran vorbeigeleitet, und durch den Unterschied zwischen dem Druck auf der Hochdruckseite der Membran und dem Entnahmedruck des Reinwassers wird Reinwasser durch die Membran gepresst. In der ersten Variante des erfindungsgemässen Verfahrens wird der Reinwasserabfluss in der Regel durch ein Stellglied, das heisst, einen variablen Strömungswiderstand bzw. Strömungsregulator, in der Reinwasserableitung begrenzt. Das Stellglied ist z.B. ein Regelventil mit einem pneumatischen, hydraulischen oder elektrischen Antrieb. Für die Steuerung des Stellgliedes kann die jeweilige Durchflussrate des Rohwasserstromes oder des Brauchwasserstromes in ein geeignetes Signal umgewandelt werden, so dass bei einer sehr geringen Durchflussrate kein Reinwasser abfliesst, während bei einer höheren Durchflussrate das Verhältnis von Durchflussrate des Reinwasserstromes zur Durchflussrate des Rohwasserstromes mindestens annäherungsweise konstant ist.

Vorteilhaft ist die Verwendung eines Regelventils, das mit der Stellkraft betätigt wird, die aus dem Staudruck der Rohwasserströmung und einer entgegengesetzt wirkenden Federkraft resultiert, oder eines Regelventils mit einem hydraulischen Antrieb, der durch den Druckunterschied betrieben wird, der an einem Strömungswiderstand in der Rohwasserströmung, insbesondere dem Umkehrosmosemodul, auftritt. Man kann aber auch die Durchflussrate des Rohwasserstromes direkt messen, z.B. mittels eines mit einem Flüssigkeitsvolumenzähler gekoppelten Impulsgebers, und zur Steuerung des Stellgliedes, insbesondere einer volumetrisch fördernden Pumpe zur Entnahme des Reinwasserstromes, verwenden.

Das Stellglied kann ferner in Abhängigkeit von einem weiteren Steuersignal, insbesondere einem Signal, das meldet, dass der Bedarf an Reinwasser gedeckt ist, auch zur vollständigen Unterbindung des Reinwasserstromes verwendet werden.

Als Stellglied eignet sich auch ein Druckreduzierventil, wenn die Brauchwasserentnahmeleitung ebenfalls ein Druckreduzierventil mit annähernd gleichem Sekundärdruck aufweist und mit der Reinwasserentnahmeseite über eine Leitung verbunden ist. Ein separates Steuersignal erübrigt sich in diesem Falle. Die Steuerung erfolgt direkt durch die Druckänderungen infolge von Brauchwasser- und/oder Reinwasserentnahme in einer Weise, dass das Verhältnis der Durchflussrate des Reinwasserstromes zur Durchflussrate des rohen Flüssigkeitsstromes annähernd konstant gehalten wird.

Wenn wegen zu geringen Brauchwasserbedarfs die Durchflussrate des Rohwasserstromes nicht genügt, um den Reinwasserbedarf zu decken, kann man einen Teil des Brauchwassers in den Rohwasserstrom zurückführen oder die Entnahme an einer Brauchwasserverbrauchsstelle, z.B. einer Waschmaschine, bei der ein verlängertes Spülprogramm von Vorteil ist, oder einer Kühlanlage oder eines Fisch- oder Zierteiches, erhöhen.

Wenn das Reinwasser gespeichert wird, kann man in dem Speicher verschiedene Nachbehandlungen durchführen, z.B.
- Alkalisierung des Reinwassers: Zu diesem Zweck wird der Speicher mit einer Schicht eines teilchenförmigen Alkalisierungsmittels, wie Calciumcarbonat, insbesondere in Form von Marmor, oder Dolomit, ausgerüstet.
- Enthärtung des Reinwassers durch Ionenaustausch: Zu diesem Zweck wird der Speicher mit einer Schicht eines geeigneten Ionenaustauschers ausgerüstet, die jeweils nach einer vorher einstellbaren Anzahl von Speicherfüllungen oder nach Durchlauf eines vorher einstellbaren Volumens von Reinwasser mit Natriumchloridlösung mittels einer der bekannten Regeneriervorrichtungen regeneriert werden kann.
- Desinfektion des Reinwassers: Zu diesem Zweck wird der Speicher mit einer Schicht eines geeigneten Desinfektionsmittels, wie mit Silber imprägniertes Kunststoffmaterial oder mit Silber imprägnierter Quarzkies, ausgerüstet.
- Desinfektion und Abbau organischer, im Reinwasser gelöster Stoffe: Zu diesem Zweck wird eine UV-Bestrahlungsvorrichtung in den Speicher oder seine Zu- oder Ableitung eingebaut.
- Dosierung von Wasserzusatzstoffen oder Wassernachbehandlungsmitteln, wie Fluorid, Polyphosphat, Ozon, Chlorpräparate, Kohlensäure: Zu diesem Zweck ist eine Dosiervorrichtung vorgesehen, die die zu dosierenden Stoffe dem Reinwasser vor dem Speicher zusetzt, um eine bessere Vermischung mit dem Wasser und/oder eine längere Kontaktzeit mit dem Wasser zu gewährleisten.
- Kühlung des Reinwassers: Zu diesem Zweck wird das Kühlelement einer Kältemaschine oder eine Kühlschlange, in der ein Kühlmittel zirkuliert, in den Speicher eingebaut oder aussen an den Speicher angelegt.

Die Vorrichtung zur Durchführung des erfindungsgemässen Verfahrens ist gekennzeichnet durch
a) ein durch die Durchflussrate des rohen Flüssigkeitsstromes steuerbares Stellglied, insbesondere ein Regelventil mit einem pneumatischen, hydraulischen oder elektrischen Antrieb oder eine volumetrisch fördernde Pumpe, zur Steuerung der Durchflussrate des gereinigten Flüssigkeitsstromes oder
b) ein parallel zur Primärseite des Membranmoduls in die Bypassleitung der Zuleitung bzw. Ableitung für den rohen bzw. den weniger reinen Flüssigkeitsstrom eingebautes Regelventil mit Ueberströmcharakteristik und gegebenenfalls ein Ventil in der Zuleitung bzw. Ableitung für den rohen bzw. den weniger reinen Flüssigkeitsstrom oder ein Ventil in der Leitung für die Entnahme der gereinigten Flüssigkeit zwecks vollständiger Unterbindung der Durchströmung des Membranmoduls oder der Membran, wenn die Durchflussrate der rohen Flüssigkeit und infolgedessen der an dem Membranmodul auftretende Druckabfall unter einen vorher eingestellten Wert absinken.

Diese Vorrichtung kann mit einem Speicher zur Speicherung der gereinigten Flüssigkeit und zu ihrer Bereitstellung an mindestens einer Zapfstelle unter Druck versehen sein. Dabei kann es sich um
a) einen zur Atmosphäre offenen Hochspeicher mit einem Ueberlauf und einer zu mindestens einer Zapfstelle führenden Leitung für die Entnahme der gereinigten Flüssigkeit oder
b) einen geschlossenen Speicher mit einem vorgespannten Gaskissen und einer zu mindestens einer Zapfstelle führenden Leitung für die Entnahme der gereinigten Flüssigkeit

handeln.

Die Vorrichtung kann auch einen geschlossenen Speicher und ein Druckreduzierventil in einer den Speicher mit der Zuleitung für die rohe Flüssigkeit verbindenden Leitung aufweisen, wobei das Druckreduzierventil so eingestellt ist, dass es rohe Flüssigkeit in den Speicher einströmen lässt, wenn der Druck im Speicher unter einen ersten, vorher eingestellten Wert absinkt, und dass es eine mit dem Speicher verbundende Ueberströmvorrichtung, insbesondere eine Ueberlaufleitung, öffnet, wenn der Druck im Speicher über einen zweiten, höheren vorher eingestellten Wert ansteigt.

Ein geeigneter, vorzugsweise zylindrischer Speicher weist eine an einer hohlen zentralen Stange geführte, bewegliche Trennplatte zur Trennung der gereinigten Flüssigkeit von der rohen Flüssigkeit, die jedoch weder an der Stange noch an der Wandung des Speichers dicht anliegt, sowie Kontaktstellen an der Führungshülse der Stange zur Anzeige der vollständigen Entnahme der gereinigten Flüssigkeit auf.

Wenn die gereinigte Flüssigkeit der Trennanlage nicht unter einem Druck entnommen werden kann, der zu seiner Weiterleitung zu seinen Verbrauchsstellen ausreicht, kann ihr Druck mittels einer Pumpe erhöht werden; man kann aber auch zwei wechselweise betriebene Speicher für gereinigte Flüssigkeit und eine mit der Zuleitung für die rohe Flüssigkeit verbundene Leitung vorsehen, die die gereinigte Flüssigkeit unter dem Druck der rohen Flüssigkeit aus dem jeweils gefüllten Speicher verdrängt und zu den Zapfstellen fördert.

In der Zeichnung werden Ausführungsformen der erfindungsgemässen Vorrichtung erläutert. Es zeigen:
Fig. 1 eine erfindungsgemässe Vorrichtung ohne Speicher;
Fig. 2 eine erfindungsgemässe Vorrichtung mit einem zur Atmosphäre offenen Speicher;
Fig. 3 eine erfindungsgemässe Vorrichtung mit einem geschlossenen Speicher;
Fig. 4 einen Speicher für eine erfindungsgemässe Vorrichtung;
Fig. 5 eine erfindungsgemässe Vorrichtung mit einem Speicher;
Fig. 6 eine erfindungsgemässe Vorrichtung mit zwei wechselweise betriebenen Speichern; und
Fig. 7 eine erfindungsgemässe Vorrichtung mit zwei parallel geschalteten, aufeinander abgestimmten Druckreduzierventilen.

In den Figuren sind gleiche Teile mit der gleichen Bezugsziffer bezeichnet.

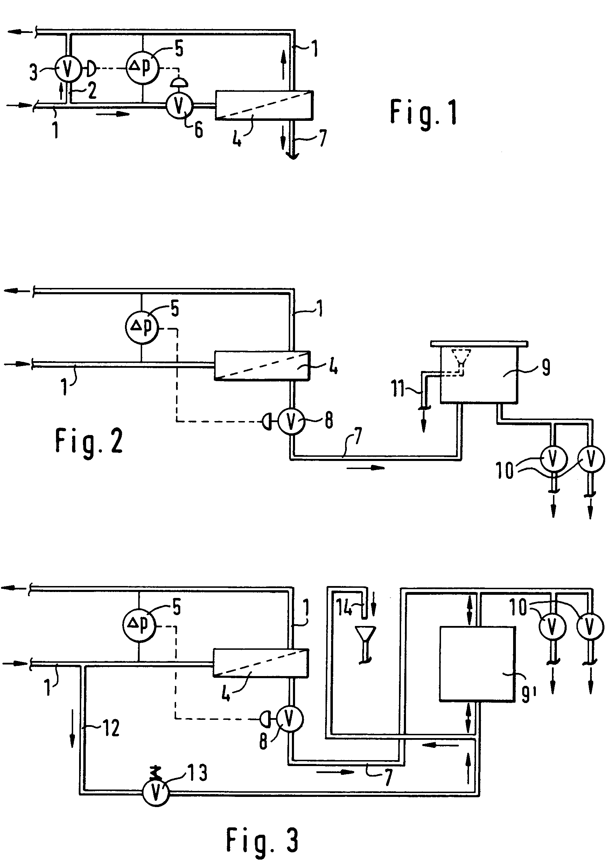

In Fig. 1 ist eine Leitung, die dem Membranmodul 4 Rohwasser zuführt und Brauchwasser aus dem Membranmodul 4 abführt, mit 1 bezeichnet. Eine Bypassleitung 2 verbindet die Rohwasserzufuhrseite der Leitung 1 mit der Brauchwasserabfuhrseite der Leitung 1. In die Bypassleitung 2 ist ein Ventil 3 mit Ueberströmcharakteristik, das heisst, eine Vorrichtung, die trotz eines zeitlich veränderlichen Flüssigkeitsdurchsatzes einen annähernd konstanten Differenzdruck erzeugt, parallel zur Primärseite des Membranmoduls eingebaut. Da der Differenzdruck (der durch ein Differenzdruckmessgerät 5 gemessen werden könnte) konstant ist, fliesst ein konstanter Anteil des Rohwasserstromes durch das Membranmodul 4, wobei ein konstanter Reinwasserstrom erzeugt wird, der durch die Entnahmeleitung 7 abfliesst. Diese Vorrichtung ist dann geeignet, wenn wesentlich mehr Rohwasser zur Verfügung steht, als zur Produktion der benötigten Reinwassermenge erforderlich ist.

Wenn die Möglichkeit besteht, dass der Rohwasserstrom so weit abfällt, dass der maximal zulässige WCF überschritten wird, wird entweder ein Ventil 6 in die Rohwasserzuleitung 1 zum Membranmodul 4 oder ein (nicht dargestelltes) Ventil in die Entnahmeleitung 7 eingebaut, um die Durchströmung zu unterbinden, wenn der Rohwasserstrom so weit abfällt, dass der von dem Differenzdruckmessgerät 5 gemessene Differenzdruck nicht mehr eingehalten werden kann oder wesentlich unter den Sollwert abfällt. Damit lassen sich Ausfällungen auf der Membran verhindern.

Häufig ist es erwünscht, das Reinwasser an einer oder mehreren Zapfstellen dauernd und unter einem ausreichenden Druck [mindestens 1 bis 2 m WS (Wassersäule)] zur Verfügung zu stellen. Da der Verbrauch von Reinwasser und Brauchwasser in der Regel zeitlich nicht parallel verläuft, muss oft ein Teil des Reinwassers gespeichert werden, bis es benötigt wird.

Wenn der Druck, unter dem das Rohwasser angeliefert wird, ausreicht, um das Wasser durch die Membran zu pressen und ausserdem das produzierte Reinwasser zu den Zapfstellen zu fördern, sind insbesondere die in den Figuren 2 und 3 dargestellten Vorrichtungen sinnvoll.

In Fig. 2 wird das in die Reinwasserentnahmeleitung 7 eingebaute Regelventil 8 durch das Differenzdruckmessgerät 5 so gesteuert, dass das Verhältnis zwischen der Durchflussrate des Reinwasserstromes und der Durchflussrate des Rohwasserstromes mindestens annähernd konstant ist. Diese Bedingung ist für Anlagen kleinerer und mittlerer Leistung ausreichend erfüllt, wenn der freie Durchgang des Regelventils 8 dem Differenzdruck direkt proportional ist. In diesem Falle ist weder eine Transformation des Differenzdruckes in ein dem Durchsatz proportionales Signal erforderlich noch eine Durchflussregelung in einem geschlossenen Regelkreis.

Während die Direktsteuerung in Anlagen mit geringer Leistung ihren Zweck genügend genau erfüllt, ist eine eigentliche Durchflussregelung, die das Verhältnis der Durchflussrate des Reinwasserstromes zur Durchflussrate des Rohwasserstromes über einen Regelkreis konstant hält, in der Regel nur für Anlagen mit grösserer Leistung und/oder stark varierendem Rohwasserdruck angebracht.

Das Reinwasser wird durch die Entnahmeleitung 7 in einen belüfteten, das heisst, zur Atmosphäre offenen, mit einem Ueberlauf 11 versehenen Hochspeicher 9 transportiert, aus dem es bei Bedarf an den tiefer liegenden Zapfstellen 10 entnommen werden kann.

Das Regelventil 8 kann nicht nur durch den Differenzdruck zwischen dem Rohwasserstrom und dem Brauchwasserstrom, sondern auch noch in Abhängigkeit von dem Füllstand des Hochspeichers 9 so gesteuert werden, dass es geschlossen wird, wenn das Niveau des Reinwassers im Speicher 9 nur noch wenig unter dem Ueberlaufniveau liegt, und erst bei einem etwas darunter liegenden Reinwasserniveau wieder von dem Differenzdruck gesteuert wird. Durch diese Uebersteuerung des Regelventils 8 lassen sich Wasserverluste vermeiden.

Wenn über den Reinwasserzapfstellen nicht genügend Raum für die Aufstellung eines Hochspeichers ist, kann ein geschlossener Speicher mit einem vorgespannten Luftkissen vorgesehen werden. Eine allfällige Uebersteuerung des Regelventils 8 erfolgt dann in Abhängigkeit vom Druck im Speicher statt, wie in Fig. 2, in Abhängigkeit vom Füllstand des Hochspeichers 9.

Fig. 3 zeigt eine besonders vorteilhafte Vorrichtung, bei der das Verhältnis von Durchflussrate des Reinwasserstromes zur Durchflussrate des Rohwasserstromes wie in Fig. 2 gesteuert wird. Das Reinwasser fliesst durch die Entnahmeleitung 7 und das Regelventil 8 in einen geschlossenen Speicher 9', der durch eine Leitung 12, in die ein Druckreduzierventil 13 eingebaut ist, mit der Rohwasserzufuhrseite der Leitung 1 verbunden ist. Das Druckreduzierventil ist so eingestellt, dass Rohwasser über die Leitung 12 in den Speicher 9' einströmt, wenn der Druck im Speicher 9' unter einen vorher eingestellten Wert (z.B. 5 m WS) absinkt. Wenn der Druck im Speicher 9' ansteigt, weil mehr Reinwasser über die Entnahmeleitung 7 und das Regelventil 8 in den Speicher 9' einströmt, als an den Zapfstellen 10 verbraucht wird, öffnet sich eine in die Leitung 12 eingebaute Ueberström- oder Druckhaltevorrichtung (in Fig. 3 als Ueberlaufleitung 14 dargestellt), so dass noch im Speicher 9' vorhandenes Rohwasser über die Ueberströmvorrichtung abfliesst und der Speicher 9' mit Reinwasser geladen wird.

Diese Vorrichtung ist besonders vorteilhaft, weil sie sicherstellt, dass an den Zapfstellen 10 immer Wasser zur Verfügung steht. Wenn der Speicher 9' kein Reinwasser mehr enthält, wird wenigstens Rohwasser über die Leitung 12 und das Reduzierventil 13 in den Speicher 9' und aus diesem zu den Zapfstellen 10 geführt. Erforderlichenfalls kann die Entladung des Speichers 9' an den Zapfstellen 10 mittels einer Leitfähigkeitsmessung signalisiert und/oder die Lieferung von Wasser an die Zapfstellen 10 unterbunden werden.

Das Druckreduzierventil 13 kann eine beliebige Vorrichtung sein, die bei einem bestimmten Druck im Speicher 9' den Durchfluss von Rohwasser durch die Leitung 12 in den Speicher 9' freigibt und die Rohwasserströmung unterbindet, wenn der Druck im Speicher 9' über diesen Druckwert ansteigt. Entsprechendes gilt für die Ueberström- oder Druckhaltevorrichtung.

Alternativ können das Reinwasser und das Rohwasser im Speicher 9' durch eine wasserundurchlässige Membran, wie sie in der Praxis häufig verwendet wird, voneinander getrennt werden. Dabei geht allerdings der nicht unbedeutende Vorteil der Versorgungssicherheit verloren, denn wenn das Reinwasserabteil leer ist, wird kein Rohwasser nachgeliefert. Dieser Aufwand ist auch wegen der solchen Membranen immanenten Störquellen, wie Verletzung, Bruch, Leckage oder Verkeimung der Membran, für die Speicherung von Trinkwasser kaum gerechtfertigt. Dagegen ist die Verwendung einer wasserundurchlässigen Membran angebracht, wenn Reinwasser für anspruchsvolle technische Zwecke, z.B. für die Verwendung im Laboratorium, gespeichert werden soll.

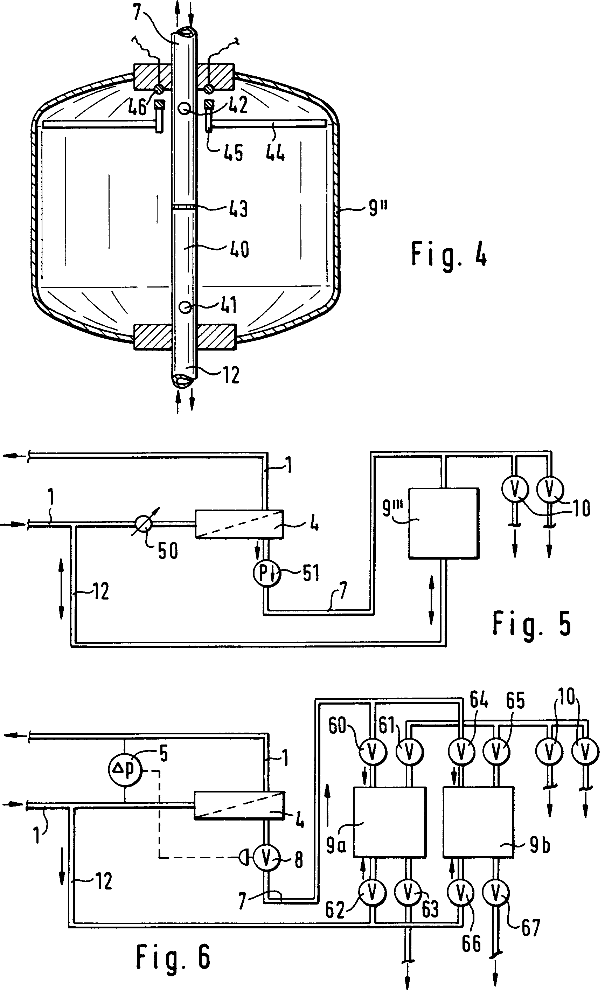

Fig. 4 zeigt einen Speicher, wie er mit Vorteil in einer Vorrichtung nach Fig. 3 verwendet wird und der mit 9'' bezeichnet ist. Der Speicher 9'' ist vorzugsweise zylindrisch und enthält eine bewegliche Trennplatte 44, die an einer hohlen zentralen Stange 40 mit einem undurchlässigen mittleren Trennelement 43 geführt ist. Die hohle Stange 40 ist ihrerseits mit den Leitungen 7 und 12 verbunden, die zur Zu- und Abfuhr von Reinwasser bzw. Rohwasser dienen, und weist radial angeordnete Oeffnungen 41 und 42 auf, die eine gleichmässige Verteilung von einströmendem Roh- bzw. Reinwasser bewirken. Die hohle Stange 40 ist nur eine besonders vorteilhafte Ausbildung. Die Flüssigkeits-Zu- und Ableitungen können auch durch eigene Stutzen geführt werden.

Die Trennplatte 44 deckt praktisch den ganzen Querschnitt des Speichers 9'' ab, ohne jedoch an der Stange 40 und der Wandung des Speichers 9'' dicht anzuliegen. Wenn der Speicher kein Reinwasser mehr enthält, liegt die Trennplatte 44 oben an. Da sie in einem gewissen Masse verformbar ist, wenn sie z.B. aus Weichpolyethylen besteht, kann dann wenigstens Rohwasser aus dem Speicher entnommen werden.

Eine weitere vorteilhafte Eigenschaft des Speichers 9'' besteht darin, dass sich die Entladung des Speichers 9'' melden lässt durch elektrische Kontakte, z.B. zwei elektrisch leitende Erhöhungen 46 im Deckel des Speichers 9'' und einen elektrisch leitenden Ring an der Führungshülse 45 der Platte 44, die einen Stromkreis schliessen, wenn die Platte in ihre in Fig. 4 dargestellte Endstellung zu liegen kommt. Dadurch können auch weitere Vorgänge gesteuert werden.

Durch eine geeignete Formgebung der Führungshülse 45 kann die Flüssigkeitsentnahme aus dem Speicher 9'', wenn dieser kein Reinwasser mehr enthält, partiell gedrosselt werden, wodurch die Entleerung des Speichers 9'' an den Zapfstellen angezeigt wird. Wenn sich die Führungshülse 45 über die Reinwasserentnahmeöffnungen 42 schiebt, steigt nämlich der Strömungswiderstand bei der Reinwasserentnahme. Dies ergibt an den Zapfstellen eine abnehmende Strömung und/oder einen abnehmenden Entnahmedruck, wodurch signalisiert wird, dass der Speicher 9'' kein Reinwasser mehr enthält.

Wenn der Druck des Rohwassers nicht ausreicht, um das Reinwasser nicht nur zu produzieren, sondern auch zu verteilen, das heisst, unter Druck zu den Zapfstellen zu führen, bietet sich die in Fig. 5 gezeigte Vorrichtung an. Eine volumetrisch fördernde Pumpe 51 wird durch einen Durchflussgeber 50 gesteuert. Dieser ist z.B. ein mit einem Wassermesser gekoppelter Impulsgeber, der jeweils nach Durchlauf einer bestimmten Rohwassermenge durch die Leitung 1 einen Impuls an den Antrieb der Pumpe 51 gibt, die für jeden Impuls eine bestimmte, vorher einstellbare Reinwassermenge durch die Leitung 7 aus dem Membranmodul 4 entnimmt. Das Verhältnis der Durchflussrate des Reinwasserstromes zur Durchflussrate des Rohwasserstromes ist somit konstant.

Die Pumpe 51 kann aber auch analog der Steuerung des Regelventils in den Figuren 2 und 3 gesteuert werden. Es können die gleichen Speicher verwendet werden wie in Fig. 3, insbesondere der in Fig. 4 dargestellte Speicher. Im letzteren Falle ist das Reduzierventil in der Leitung 12 nicht unbedingt erforderlich, und auch eine Ueberlaufleitung 14 braucht nicht vorhanden zu sein. Das Rohwasser strömt unter dem Druck des durch die Leitung 12 fliessenden Rohwassers aus dem Speicher 9''' zu den Zapfstellen 10, und wenn der Speicher 9''' mit Reinwasser gefüllt ist, fliesst das überschüssige Reinwasser durch die Leitung 12 in die Rohwasserleitung 1 zurück und kann bei Bedarf wieder aus der Leitung 12 in den Speicher 9''' zurückströmen. Für Anlagen mit ganz geringer Leistung, z.B. 1 l/h Reinwasser, kann die Leitung 12, erforderlichenfalls mit vergrössertem Durchmesser, auch als Speicher dienen.

Die Vorrichtung nach Fig. 5 ist für Anlagen mit sehr geringer Leistung von bis zu einigen Litern pro Stunde besonders zweckmässig. Für diese Vorrichtung eignen sich bekannte, häufig für die Wasserbehandlung verwendete mengenabhängig gesteuerte Dosiervorrichtungen, die eine Kombination von Durchflussgeber 50 und volumetrisch fördernder Pumpe 51 darstellen, gut. In diesem Falle erfolgt die Reinwasserentnahme aus dem Membranmodul 4 über eine Vorrichtung, die das Reinwasser auf atmosphärischen Druck bringt und analog einem Schwimmer-Kondensatableiter mit einem durch einen Schwimmer betätigten Auslassventil versehen ist. Somit liegen für die Dosiervorrichtung zeitlich gleichbleibende Verhältnisse vor.

Fig. 6 zeigt eine Vorrichtung mit zwei wechselweise in Betrieb stehenden Speichern 9a und 9b, mit der das Reinwasser kontinuierlich unter einem reduzierten oder dem vollen Druck des Rohwassers über die Leitung 12 an den Reinwasserzapfstellen 10 zur Verfügung gestellt wird. Auch in diesem Falle können die gleichen Speicher verwendet werden wie in Fig. 3, insbesondere der in Fig. 4 dargestellte Speicher. Im letzteren Falle kann das Umschalten vom vollständig entladenen Speicher, z.B. 9a, auf den mit Reinwasser gefüllten Speicher 9b durch die elektrischen Kontakte 46, wie im Zusammenhang mit Fig. 4 beschrieben, gesteuert werden.

Die Ventile 60 bis 67 lassen sich in zwei Gruppen einteilen:
Die Gruppe A umfasst die Ventile 60, 63, 65 und 66, die geschlossen sind, wenn der Speicher 9a entladen und der Speicher 9b beladen wird, und
die Gruppe B umfasst die Ventile 61, 62, 64 und 67, die geschlossen sind, wenn der Speicher 9b entladen und der Speicher 9a beladen wird.

Diese beiden Ventilgruppen können in einem Mehrwegventil mit einem mechanischen, elektrisch, pneumatisch oder hydraulisch betätigten Antrieb zusammengefasst werden, das nur zwei Positionen hat: Entweder sind die Ventile der Gruppe A geöffnet und die Ventile der Gruppe B geschlossen oder umgekehrt. Der Antrieb des Mehrwegventils, der dieses von der einen in die andere Position schaltet und umgekehrt, kann ebenfalls wie im Zusammenhang mit Fig. 4 beschrieben durch die elektrischen Kontakte 46 gesteuert werden.

Wenn die Umschaltungsvorgänge zu rasch aufeinander folgen, weil über einen längeren Zeitraum mehr Reinwasser verbraucht als produziert wird, kann ein Signal aufbereitet werden, das anzeigt, dass entweder der WCF erhöht werden muss oder, wenn der WCF den maximalen zulässigen Wert schon erreicht hat, die Durchflussrate des Rohwasserstromes erhöht oder die Reinwasserentnahme reduziert werden muss.

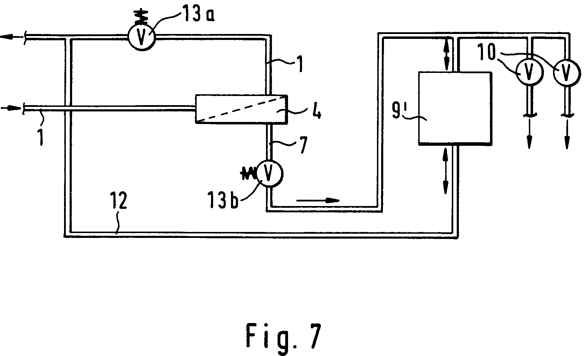

Die in Fig. 7 dargestellte Vorrichtung ist dann besonders zweckmässig, wenn der rohe Flüssigkeitsstrom unter einem so weit über dem zur Verteilung der beiden Flüssigkeitsströme erforderlichen Druck vorliegt, dass die Druckdifferenz zum Betrieb der Membrantrennanlage ausreicht. In die Brauchwasserleitung 1 wird nach dem Membranmodul 4 ein Druckreduzierventil 13a und in die Reinwasserentnahmeleitung 7 ein Druckreduzierventil 13b eingebaut. Beide Druckreduzierventile sind auf mindestens annähernd denselben Sekundärdruck eingestellt. Brauchwasser und Reinwasser werden praktisch unter diesem Druck entnommen. Leitung 12, die die Brauchwasserentnahmeleitung 1 mit dem Speicher 9' an seiner der Reinwasserzuleitung gegenüberliegenden Seite verbindet, bewirkt, dass das Verhältnis der Durchflussrate des Reinwasserstromes zur Durchflussrate des rohen Flüssigkeitsstromes in jedem Fall mindestens annähernd konstant gehalten wird. Wenn weder Brauchwasser noch Reinwasser entnommen wird, sind beide Druckreduzierventile geschlossen. Wenn Brauchwasser entnommen wird, öffnen beide Druckreduzierventile. Wasser strömt dann sowohl direkt über das Druckreduzierventil 13a als Brauchwasser zum Verbraucher als auch über das Druckreduzierventil 13b als Reinwasser, welches Brauchwasser aus dem Speicher 9' verdrängt und über die Leitung 12 zum Verbraucher stösst. Auch wenn an den Zapfstellen 10 Reinwasser entnommen wird, öffnen beide Druckreduzierventile. Reinwasser strömt dann sowohl direkt über die Leitung 7 und das Druckreduzierventil 13b zu den Zapfstellen 10 als auch, von Brauchwasser über die Leitung 12 gestossen, aus dem Speicher 9'. Wenn gleichzeitig Reinwasser und Brauchwasser entnommen werden, strömt Wasser je nach dem Verhältnis der beiden Entnahmeraten in der einen oder der anderen Richtung durch die Leitung 12, wobei sich der Speicher 9' mit Reinwasser füllt oder leert. Wenn der Speicher nur noch Reinwasser enthält, fliesst dieses über die Leitung 12 in die Brauchwasserleitung 1 und vereinigt sich mit Brauchwasser zu der der Qualität des Rohwassers entsprechenden Qualität.

Die Vorrichtung gemäss Fig. 7 kann gewünschtenfalls auch eine (nicht dargestellte) Bypassleitung - wie im Zusammenhang mit Fig. 1 erläutert - aufweisen, die die Rohwasserzufuhrseite der Leitung 1 mit der Brauchwasserabfuhrseite der Leitung 1 an einer in Strömungsrichtung vor dem Druckreduzierventil 13a liegenden Stelle verbindet.

## Patentansprüche

1. Membrantrennverfahren, insbesondere Umkehrosmoseverfahren oder Ultrafiltrationsverfahren, bei dem ein unter Druck vorliegender roher, wässriger Flüssigkeitsstrom, der insbesondere gelöste Stoffe enthält, speziell ein Rohwasserstrom, in einen gereinigten Flüssigkeitsstrom, insbesondere einen Reinwasserstrom, der für Zwecke bestimmt ist, die höhere Anforderungen an die Reinheit der Flüssigkeit stellen, und einen weniger reinen Flüssigkeitsstrom, insbesondere einen Brauchwasserstrom, der für weniger anspruchsvolle Zwecke bestimmt ist, aufgeteilt wird, dadurch gekennzeichnet, dass
a) der rohe Flüssigkeitsstrom zeitlichen Durchflussänderungen unterliegt und dass das Verhältnis der Durchflussrate des gereinigten Flüssigkeitsstromes zur Durchflussrate des rohen Flüssigkeitsstromes mindestens annähernd konstant gehalten wird oder
b) dem zeitlichen Durchflussänderungen unterliegenden rohen Flüssigkeitsstrom ein Teilstrom, dessen Durchflussrate konstant ist, entnommen und aufgeteilt wird, wobei das Verhältnis der Durchflussrate des gereinigten Flüssigkeitsstromes zur Durchflussrate des rohen Teilstromes konstant gehalten wird,
wobei der weniger reine Flüssigkeitsstrom unter einem nur geringfügig niedrigeren Druck als der rohe Flüssigkeitsstrom zur Verfügung steht.

2. Verfahren nach Anspruch 1, dadurch gekennzeichnet, dass man von einem partiell oder vollständig enthärteten und/oder mit einer Substanz, die die Auscheidung schwerlöslicher Stoffe verhindert, insbesondere Polyphosphat, versetzten wässrigen Flüssigkeitsstrom, der gelöste Stoffe enthält, ausgeht.

3. Verfahren nach Anspruch 1a) oder 2, dadurch gekennzeichnet, dass die Durchflussrate des gereinigten Flüssigkeitsstromes durch ein Stellglied, insbesondere ein Regelventil mit einem pneumatischen, hydraulischen oder elektrischen Antrieb oder eine volumetrisch fördernde Dosierpumpe, gesteuert wird, das seinerseits durch die jeweilige Durchflussrate des rohen Flüssigkeitsstromes gesteuert wird.

4. Verfahren nach Anspruch 3, dadurch gekennzeichnet, dass der Staudruck bzw. der Druckverlust, der in dem rohen Flüssigkeitsstrom an einem in seinen Fluss eingebauten Strömungswiderstand auftritt, zur Betätigung des Stellgliedes verwendet wird, das die Durchflussrate des gereinigten Flüssigkeitsstromes steuert.

5. Verfahren nach Anspruch 3, dadurch gekennzeichnet, dass die Durchflussrate des rohen Flüssigkeitsstromes direkt, insbesondere mittels eines mit einem Flüssigkeitsvolumenzähler gekoppelten Impulsgebers, erfasst und zur Steuerung des Stellgliedes, insbesondere der volumetrisch fördernden Pumpe zur Entnahme des gereinigten Flüssigkeitsstromes, verwendet wird.

6. Verfahren nach einem der Ansprüche 3 bis 5, dadurch gekennzeichnet, dass das Stellglied in Abhängigkeit von einem weiteren Steuersignal, insbesondere einem Signal, das meldet, dass der Bedarf an gereinigter Flüssigkeit gedeckt ist, auch zur vollständigen Unterbindung des gereinigten Flüssigkeitsstromes verwendet wird.

7. Verfahren nach einem der Ansprüche 1 bis 5, dadurch gekennzeichnet, dass wegen zu geringen Bedarfs für die weniger reine Flüssigkeit die Durchflussrate der rohen Flüssigkeit nicht genügt, um den Bedarf an gereinigter Flüssigkeit zu decken, weshalb
a) ein Teil der weniger reinen Flüssigkeit in den rohen Flüssigkeitsstrom zurückgeführt wird oder
b) die Entnahme an einer Verbrauchstelle für weniger reine Flüssigkeit, bei der ein höherer Verbrauch von Nutzen ist, erhöht wird.

8. Verfahren nach einem der Ansprüche 1 bis 7, dadurch gekennzeichnet, dass die gereinigte Flüssigkeit gespeichert wird, wobei die gereinigte Flüssigkeit in dem Speicher einer der folgenden Nachbehandlungen unterworfen werden kann: Alkalisierung, Enthärtung durch Ionenaustausch, Desinfektion, Abbau von organischen, in der Flüssigkeit gelösten Stoffen, Dosierung von Wasserzusatzstoffen oder Wassernachbehandlungsmitteln, Kühlung.

9. Vorrichtung zur Durchführung des Verfahrens nach einem der Ansprüche 1 bis 8, gekennzeichnet durch
a) ein durch die Durchflussrate des rohen Flüssigkeitsstromes steuerbares Stellglied, insbesondere ein Regelventil mit einem pneumatischen, hydraulischen oder elektrischen Antrieb oder eine volumetrisch fördernde Pumpe, zur Steuerung der Durchflussrate des gereinigten Flüssigkeitsstromes oder
b) ein parallel zur Primärseite des Membranmoduls (4) in die Bypassleitung (2) der Zuleitung bzw. Ableitung (1) für den rohen bzw. den weniger reinen Flüssigkeitsstrom eingebautes Regelventil (3) mit Ueberströmcharakteristik und gegebenenfalls ein Ventil (6) in der Leitung (1) oder ein Ventil in der Leitung (7) für die Entnahme der gereinigten Flüssigkeit zur vollständigen Unterbindung der Durchströmung des Membranmoduls (4) oder der Membran, wenn die Durchflussrate der rohen Flüssigkeit und infolgedessen der an dem Membranmodul (4) auftretende Druckabfall unter einen vorher eingestellten Wert absinken (Fig. 1).

10. Vorrichtung nach Anspruch 9 zur Durchführung des Verfahrens nach Anspruch 8, gekennzeichnet durch
a) einen zur Atmosphäre offenen Hochspeicher (9) mit einem Ueberlauf (11) und einer zu mindestens einer Zapfstelle (10) führenden Leitung für die Entnahme der gereinigten Flüssigkeit (Fig. 2) oder
b) einen geschlossenen Speicher mit einem vorgespannten Gaskissen und einer zu mindestens einer Zapfstelle führenden Leitung für die Entnahme der gereinigten Flüssigkeit.

11. Vorrichtung nach Anspruch 9 zur Durchführung des Verfahrens nach Anspruch 8, gekennzeichnet durch einen geschlossenen Speicher (9') und ein Druckreduzierventil (13) in einer den Speicher (9') mit der Zuleitung (1) für die rohe Flüssigkeit verbindenden Leitung (12) zur Zufuhr von roher Flüssigkeit zu dem Speicher (9') , wenn der Druck im Speicher (9') unter einen ersten, vorher eingestellten Wert absinkt, und zur Oeffnung einer mit dem Speicher (9') verbundenen Ueberströmvorrichtung (14), insbesondere einer Ueberlaufleitung, wenn der Druck im Speicher (9') über einen zweiten, höheren vorher eingestellten Wert ansteigt (Fig. 3).

12. Vorrichtung nach Anspruch 9 zur Durchführung des Verfahrens nach Anspruch 8, gekennzeichnet durch einen vorzugsweise zylindrischen Speicher (9'') mit einer an einer, insbesondere hohlen, zentralen Stange (40) geführten, beweglichen Trennplatte (44) zur Trennung der gereinigten Flüssigkeit von der rohen Flüssigkeit, die jedoch weder an der Stange (40) noch an der Wandung des Speichers (9'') dicht anliegt, sowie Kontaktstellen (46) an der Führungshülse (45) der Stange (40) zur Anzeige der vollständigen Entnahme der gereinigten Flüssigkeit (Fig. 4).

13. Vorrichtung nach Anspruch 9 zur Durchführung des Verfahrens nach Anspruch 8, gekennzeichnet durch eine volumetrisch fördernde Pumpe (51) zur Einleitung der gereinigten Flüssigkeit unter Druck in den Speicher (9''') sowie zum Fördern der gereinigten Flüssigkeit in die Zuleitung (1) der rohen Flüssigkeit, wenn der Speicher (9''') mit gereinigter Flüssigkeit gefüllt ist (Fig. 5).

14. Vorrichtung nach Anspruch 9 zur Durchführung des Verfahrens nach Anspruch 8, gekennzeichnet durch zwei wechselweise betriebene Speicher (9a, 9b) für die gereinigte Flüssigkeit und eine mit der Zuleitung (1) für die rohe Flüssigkeit verbundene Leitung (12) zur Verdrängung der gereinigten Flüssigkeit aus dem Speicher (9a bzw. 9b) und ihrer Förderung zu der mindestens einen Zapfstelle (10) (Fig. 6).

15. Vorrichtung nach Anspruch 9 zur Durchführung des Verfahrens nach Anspruch 8, gekennzeichnet durch
a) einen geschlossenen Speicher (9') und mindestens eine Zapfstelle (10) für die Entnahme der gereinigten Flüssigkeit, die über eine mit eingebautem Druckreduzierventil (13b) versehene Leitung (7) mit der Sekundärseite des Membranmoduls (4) verbunden sind,
b) eine Leitung (12), die die Entnahmeleitung (1) für die weniger reine Flüssigkeit mit dem Speicher (9') auf der der Zuleitung für die gereinigte Flüssigkeit gegenüberliegenden Seite verbindet, und
c) ein Druckreduzierventil (13a), das in die Entnahmeleitung (1) für die weniger reine Flüssigkeit an einer in Strömungsrichtung vor der Verbindungsleitung (12) zum Speicher (9') liegenden Stelle eingebaut ist und das mindestens annähernd auf denselben Sekundärdruck eingestellt ist wie das Druckreduzierventil (13b) in der Entnahmeleitung (7) für die gereinigte Flüssigkeit.
